# EUROPÄISCHE PATENTSCHRIFT

(11) **EP 0 247 387 B1**
(45) Veröffentlichungstag und Bekanntmachung des Hinweises auf die Patenterteilung: **21.07.1993**
(21) Anmeldenummer: 87106372.3
(22) Anmeldetag: 30.04.1987
(51) Int. Cl.: B23C 3/12

(54) **Verfahren und Vorrichtung zum Längsentgraten von Profilen**
Method and device for deburring profiles
Méthode et dispositif à ébarber des profilés

(30) Priorität: 30.05.1986 DE 3618224
(43) Veröffentlichungstag der Anmeldung: 02.12.1987
(73) Patentinhaber: Fried. Krupp AG Hoesch-Krupp, 44145 Dortmund (DE)
(72) Erfinder: Blumbach, Götz-Peter, Dr., D-5840 Schwerte 4 (DE); Brückner, Willi, D-5800 Hagen 5 (DE); Müller, Rudolf, D-5828 Ennepetal (DE)

(56) Entgegenhaltungen:
- DE-C- 3 506 866
- GB-A- 2 000 700
- US-A- 3 580 787
- US-A- 3 922 951
- PATENT ABSTRACTS OF JAPAN, Band 9, Nr. 272 (M-425)[1995], 30. Oktober 1985; & JP-A-60 115 393 (SHINKOU KOGYO K.K.) 21-06-1985
- SOVIET INVENTIONS ILLUSTRATED, Woche K01, 16. Februar 1983, Sektion P/Q, Klasse P54, Nr. F1500Y/25, Derwent Publications Ltd, London, GB; & SU-A-906 350 (KOBE STEEL K.K.) 15-02-1982
- PATENT ABSTRACTS OF JAPAN, Band 9, Nr. 290 (M-430)[2013], 16. November 1985; & JP-A-60 131 106 (TAIHEI KOGYO K.K.) 12-07-1985

## Beschreibung

Die Erfindung betrifft ein Verfahren gemäß dem Oberbegriff des Patentanspruches.

Anders als bei den DIN-mäßig erfaßten und lagermäßig vorgehaltenen Standardprofilen stellen warmgewalzte Spezialprofile Produkte dar, die in enger Abstimmung mit den Kunden hinsichtlich ihrer geometrischen Form und des Werkstoffes neu entwickelt werden und dazu dienen, für bestimmte technische Aufgabenstellungen maßgeschneiderte Problemlösungen zu so günstigen Kosten anzubieten, die durch Konkurrenzverfahren (Shweißkonstruktionen, Kaltprofilierung) nicht erreichbar sind.

Die Zahl der Spezialprofile ist sehr groß. Spezialprofile werden z. B. in der Automobilindustrie, im Maschinenbau, im Apparatebau, in der Bauindustrie und beim Bau landwirtschaftlicher Maschinen verwendet.

Häufig hergestellte Spezialprofile sind u. a. Scharnier- und Felgenprofile (Autoindustrie), Hubstaplerschienen und Containerprofile (Fördertechnik), Räderprofile und Bodenplatten für Erdbewegungsmaschinen, Aufzugführungsschienen (Aufzugindustrie).

Zum Erreichen einer exakten geometrischen Kontur müssen Spezialprofile mit einer Kaliberüberfüllung gewalzt werden. Die Konsequenz daraus ist das Entstehen eines Walzgrates, der in den Abmessungen zwischen 1 bis 2 mm Dicke und bis zu 6 mm Breite aufweist. Ebenso treten Grate an Spezialprofilen auf, die doppelt gewalzt und anschließend warm getrennt werden.

Gegenüber der üblichen Verfahrensweise des Einfachwalzens, die dadurch gekennzeichnet ist, daß aus einer Einheit Vormaterial jeweils eine einzige Profilader gewalzt wird, zeichnet sich das Doppeltwalzen dadurch aus, daß aus einer Vormaterialeinheit zwei Profiladern gefertigt werden.

Durch das Zusammenfügen von zwei identischen Profilen zu einem Profil mit doppeltem Metergewicht, kann die Produktivität leichter Spezialprofile verdoppelt werden, da gegenüber der Einfachwalzung die doppelte Profilmenge pro Zeiteinheit erzeugt werden kann.

Die doppeltgewalzten Spezialprofile sind durch einen dünnen Steg miteinander verbunden, die nach dem Walzvorgang voneinander getrennt und danach wie einfachgewalzte Profile weiter verarbeitet werden können.

Außerdem werden Temperaturprobleme, wie sie bei der Einfachwalzung leichter Spezialprofile häufig auftreten, bei der Verdoppelung des spezifischen Walzadergewichtes spürbar entschärft.

Der bisher technisch mögliche Weg war die Entfernung des Grates (Reststeg) mittels Kreismesser und anschließendem Schleifen der entgrateten Bereiche.

Die Nachteile des bisherigen Verfahrens liegen darin, daß aufgrund der höheren Ungenauigkeit des Kreismesserverfahrens die Möglichkeit besteht, daß Restgrate nicht entfernbar sind, oder daß durch das einlaufende Kreismesser in den Profilbereich das Material beschädigt wird. Zur Entfernung der Restgrate ist weiterhin ein zweiter Arbeitsgang, das Schleifen erforderlich.

Von daher liegt der Erfindung die Aufgabe zugrunde, ein Verfahren der eingangs genannten Art zu schaffen, das es gewährleistet, daß verkaufsfähige, doppeltgewalzte Spezialprofile nach dem Trennen in einem Arbeitsgang ohne weitere Nacharbeit und ohne Beschädigung des Materials hergestellt werden können.

Nach der Erfindung wird die Aufgabe durch die im Kennzeichen des Patentanspruches angegebenen Merkmale gelöst.

Die Vorteile des erfindungsgemäßen Verfahrens sind insbesondere darin zu sehen, daß durch den nur noch einzigen Arbeitsgang beim Längsentgraten von doppelt gewalzten Spezialprofilen eine Leistungssteigerung bei gleichzeitiger Kostensenkung erreicht wird, wozu auch eine hohe Profildurchlauf- bzw. Bearbeitungsgeschwindigkeit beiträgt.

Anhand der Prinzipzeichnung wird die Erfindung näher erläutert.

Die Vorrichtung zum Längsentgraten von Profilen besteht aus einem Treibapparat 1 mit Einlaufführungen 2 und Auslaufführungen 3 sowie entsprechend der Profilgeometrie profilierten Horizontal- und Vertikalrollensätzen 4, 5 und einer an dem Treibapparat 1 angeordneten Fräseinheit 6, die aus einer angetriebenen Frässpindel mit einem Werkzeugkopf 7 besteht, der mittels Schnellspaneinrichtungen selbstzentrierende und selbstpositionierende Werkzeuge in Form von Schneidmessern, die nicht dargestellt sind, aufweist.

Die Fräseinheit 6, die auf einem mit einem Hydraulikzylinder bestückten Kreuztisch 10 angeordnet ist, ist mit einer Steuereinheit in Form einer hydraulischen Kopiereinheit 8 mit Rollentaster 9 und mit einer Absaugvorrichtung 11 ausgerüstet.

Der Treibapparat 1 hat die Aufgabe, ein Profil 12 mit Grat 13 in die Vorrichtung einzutreiben und nach dem Entgraten auszutreiben. Dazu werden die Horizontal- und Vertikalrollensätze 4, 5, die der Geometrie des Profiles 12 angepaßt sind, angetrieben, wobei die Anlage geschwindigkeitsmäßig sowohl der gewünschten Entgrategeschwindigkeit als auch in kombinierter Fahrweise einem vorgeschalteten, nicht dargestellten Arbeitssystem angepaßt werden kann. Die Horizontal- und Vertikalrollensätze 4, 5 sowie die Ein-und Auslaufführungen 2, 3 können als komplette Sätze mittels einer nicht dargestellten Schnellwechselvorrichtung in kurzer Zeit ausgetauscht werden, um die unterschiedlichsten Profilgeometrien abdecken zu können. Weiterhin wird das Profil 12 durch nicht dargestellte geeignete Führungen innerhalb des Treibapparates schwingungsfrei gehalten.

Die Werkzeuge der Fräseinheit 6 sind so ausgelegt, daß Schnittgeschwindigkeiten erreicht werden, die dem Wirbelfräsen entsprechen. Die Zahl der jeweiligen Werkzeuge innerhalb des Werkzeugkopfes 7 ist abhängig von der gewünschten Durchlaufgeschwindigkeit des zu bearbeitenden Profils 12.

Zum Ausgleich von Fertigungs- und Maschinentoleranzen sowie Abweichungen von der Geradheit, wird die Fräseinheit 6 von der Steuereinheit so gesteuert, daß die Schnittlinie stets der Sollinie entspricht. Dabei ist es unerheblich, ob eine direkte Steuerung über einen Rollentaster 9 oder eine Regeleinheit mit Soll-Ist-Vergleichen verwendet wird. Voraussetzung ist, daß die Steuereinheit in der Lage ist, unabhängig von der Profilgeschwindigkeit den Sollwert zu erreichen.

Die hydraulische Kopiereinheit 8, die über den Rollentaster 9 die exakte Lage des Profiles 12 erfaßt, führt die Fräseinheit 6 entsprechend den erfaßten Werten nach, wobei der Rollentaster 9 so nah wie möglich am Schnittpunkt angeordnet ist.

Die beim Entgraten anfallenden Späne müssen so betriebssicher entfernt werden, daß keine Späne auf dem Profil 12 liegen bleiben können, da sie dort in Verbindung mit dem Treibapparat 1 Beschädigungen des Materiales hervorrufen können. Dies geschieht durch Absaugen mittels der Absaugvorrichtung 11.

Selbstverständlich ist es möglich, mehrere Längsgrate an Profilen gleichzeitig unter Verwendung der entsprechenden Anzahl von Fräseinheiten in einem Arbeitsgang zu entfernen.
- 1: Treibapparat
- 2: Einlaufführungen
- 3: Auslaufführungen
- 4: Horizontalrollensätze
- 5: Vertikalrollensätze
- 6: Fräseinheit
- 7: Werkzeugkopf
- 8: Kopiereinheit
- 9: Rollentaster
- 10: Kreuztisch
- 11: Absaugvorrichtung
- 12: Profil
- 13: Grat

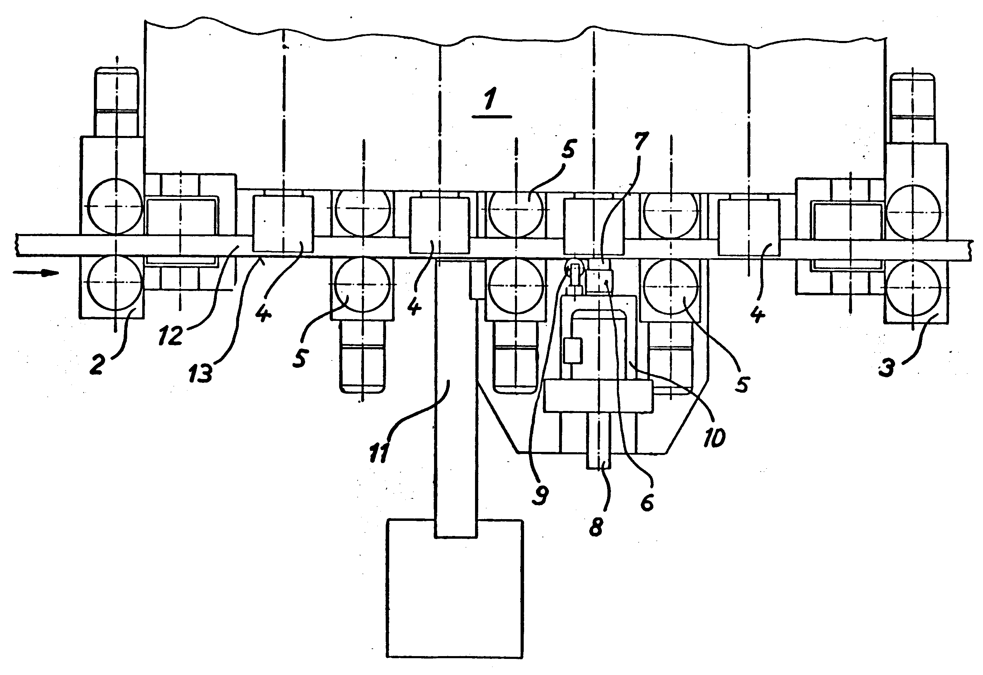

## Patentansprüche

1. Verfahren zum Längsentgraten von doppelt gewalzten Spezialprofilen, dadurch gekennzeichnet, daß die durch Trennen der doppelt gewalzten Spezialprofile entstehenden Grate (13) an den Profilen (12) nach Abtasten der Profilkontur durch Wirbelfräsen entfernt werden.

## Claims

1. Process for longitudinal deburring of double-rolled special profile sections, characterised in that the burr (13) on the profile sections (12) which occur when separating the double-rolled special profiled sections are removed by rotational milling after the profile contour has been detected.

## Revendications

1. Procédé pour ébarber des profilés spéciaux laminés, doubles, caractérisé en ce que les bavures (13) résultant dans le profilé (12) de la division du profilé spécial laminé, double, sont éliminées par fraisage en bout après palpage du contour du profilé.
